# EUROPEAN PATENT APPLICATION

(11) **EP 4 140 573 A1**
(43) Date of publication of application: **01.03.2023**
(21) Application number: 21792533.8
(22) Date of filing: 22.02.2021
(51) Int. Cl.: B01J 13/00, A24F 40/40, A24F 40/46

(54) **AEROSOL GENERATING APPARATUS**

(30) Priority: 21.04.2020 CN 202010318151
(71) Applicant: Shenzhen Merit Technology Co., Ltd., Shenzhen, Guangdong 518000 (CN)
(72) Inventor: YUAN, Yongbao, Shenzhen, Guangdong 518000 (CN)
(74) Representative: Westphal, Mussgnug & Partner, Patentanwälte mbB
(86) International application number: PCT/CN2021/077278
(87) International publication number: WO 2021/212991

(57) **Abstract**

The present invention relates to an aerosol generation device which includes a fixing tube configured for fixing an aerosol-forming substrate, a gas passage tube sleeved around the outer circumference of the fixing tube, and a heating assembly. The fixing tube includes a hollow and two-end-penetrating structure and has two ends that are respectively formed with a first opening and a second opening in communication with the first opening. The gas passage tube has one end provided with a support wall for supporting the aerosol-forming substrate. The support wall is arranged to face the second opening. The aerosol-forming substrate is extendable from the first opening into the fixing tube. The heating assembly is insertable through the support wall to penetrate from the second opening into the aerosol-forming substrate. When the aerosol-forming substrate is withdrawn from the fixing tube toward the first opening, the heating assembly is separated from the aerosol-forming substrate. The aerosol generation device allows efficient and easy withdrawal of the aerosol-forming substrate from the fixing tube without causing damage thereto, possessing an advantage of easy mounting and dismounting.

## Description

### FIELD

The present invention relates to an atomization device, and more particularly to an aerosol generation device.

### BACKGROUND

An electronic atomization device, as an emerging technology, is operated by heating a cigarette liquid or a low-temperature cigarette to replace the traditional burning cigarette so as to have a low operation temperature and harmful substances contained in the fume generated thereby are far less than the traditional burning cigarettes. The electronic atomization device can significantly avoid the adverse effects that the cigarettes cast on human bodies and is a healthier way of tabaco inhaling. The electronic atomization devices that are currently available in the market are generally classified in two types, one of which is an electronic atomization device that forms an inhalable fume by vaporizing the cigarette liquid, and a second one is an aerosol generation device that forms an inhalable fume by heating a tabaco aerosol-forming substrate in a low-temperature heating but non-combusting way. For the aerosol generation device, it is generally such that a heater, such as a heating plate, is penetrated into the aerosol-forming substrate to heat the aerosol-forming substrate and through controlling a heating temperature, the ingredient components of the aerosol-forming substrate are caused to vaporize to generate fume to be inhaled by people. When a cigarette has been heated for a predetermined time such that the amount of fume generated thereby reaches an upper limit, the aerosol-forming substrate must be withdrawn from the aerosol generation device, or inhaling must be stopped, or replacement with a fresh aerosol-forming substrate must be made for subsequent inhaling. In this moment, it is a critical issue to easily and efficiently withdraw the aerosol-forming substrate from the aerosol generation device in such a way as to cause no damage to the aerosol-forming substrate and leave no residues on the heater. The known aerosol generation devices are often operated by hand pulling to remove the aerosol-forming substrate from the aerosol generation device. Since the forces applied by users may be different and the magnitudes of pulling forces may be significantly different, many users, when pulling the cigarette, often suffers problems of the aerosol-forming substrate being pulled broken or tobacco left on the heater.

### SUMMARY

The technical problem to be solved by the present invention is to provide an improved aerosol generation device.

The technical solution adopted by the present invention to solve the technical problem is to construct an aerosol generation device, including a fixing tube configured to fix an aerosol-forming substrate, a gas passage tube sleeved around the outer circumference of the fixing tube, and a heating assembly;
the fixing tube including a hollow and two-end-penetrating structure and having two ends that are respectively formed with a first opening and a second opening in communication with the first opening;
the gas passage tube having one end provided with a support wall for supporting the aerosol-forming substrate, the support wall being arranged to face the second opening;
the aerosol-forming substrate being extendable from the first opening into the fixing tube, the heating assembly being insertable through the support wall to penetrate from the second opening into the aerosol-forming substrate; the aerosol-forming substrate being withdrawable from the fixing tube toward the first opening, so as to have the heating assembly separated from the aerosol-forming substrate.

Preferably, the fixing tube includes a fixing section that fixes the aerosol-forming substrate and is removably inserted into the gas passage tube and is in a tubular form; the fixing section is of a hollow structure, of which an interior forms an insertion channel;
the first opening and the second opening are respectively arranged on two ends of the fixing section and are in communication with the insertion channel.

Preferably, a gap is formed between the fixing section and the gas passage tube.

Preferably, a through hole is formed in a sidewall of the fixing section and is in communication with the gas passage tube.

Preferably, the fixing tube further includes a mounting section arranged at the first opening of the fixing section;
the aerosol generation device further includes a top cover sleeved aroundthe outer circumference of the fixing tube and releasably connected to the mounting section (12); the top cover is removably sleeved around the outer circumference of the gas passage tube;
the top cover has a third opening arranged to face the first opening.

Preferably, the top cover and the mounting section are provided with a coupling structure for releasably connecting the top cover to the mounting section.

Preferably, the coupling structure includes a locking fastener arranged on a sidewall of the mounting section and a locking slot arranged in the inner side of the top cover and arranged to face the locking fastener.

Preferably, a protective lid is further included and is slidably mounted on the top cover to close and block the third opening.

Preferably, a slider is arranged in a hollow compartment of the mounting section and is slidable in a direction toward the third opening; an elastic piece is arranged between the slider and the sidewall of the mounting section;
the protective lid comprises a lid body;
the lid body is provided with a connection peg that inserts into the top cover to connect to the slider.

Preferably, the heating assembly includes a heating body that inserts through the support wall to insert from the second opening into the aerosol-forming substrate.

Preferably, the heating body is in a shape of a columnar configuration.

Preferably, the heating body includes a main portion that is cylindrical and a sharp tip structure that is arranged on one end of the main portion and is in a shape of a conical form;
the aerosol-forming substrate is withdrawable, through rotation, from the second opening toward the first opening to separate from the heating body.

Preferably, the support wall has a through aperture that receives the heating body to penetrate into the fixing tube.

Preferably, the cross-sectional shape of the through aperture corresponds to the cross-sectional shape of the heating body, and the cross-sectional size of the through aperture is less than the cross-sectional size of the second opening.

Preferably, the heat-generating assembly further includes a retaining frame configured for mounting the heating body;
the gas passage tube is sliding-engageable with the retaining frame.

Preferably, the retaining frame includes a sleeve body, and the sleeve body includes a first sleeving section, and a second sleeving section that is arranged side by side with respect to the first sleeving section in a transverse direction and is connected to the first sleeving section;
the height of the second sleeving section is less than the height of the first sleeving section, and the heating body is extendable out of the second sleeving section.

Preferably, the sidewall of the first sleeving section that is adjacent to the second sleeving section is provided with a first joining section;
the second sleeving section is provided with a second joining section;
the gas passage tube comprises a tubular body, a first engagement section arranged on one side of the tubular body and connectable with the first joining section, and a second engagement section arranged at one end of the tubular body and sleeved around the second joining section to connect with the second joining section.

Preferably, a sidewall of the gas passage tube is provided with an operation section;
the operation section comprises multiple elongate recesses.

Preferably, the aerosol generation device further includes a power supply assembly connected with the heating assembly.

By implementing the aerosol generation device provided in the present invention, the following beneficial effects may be caused: the aerosol generation device, when put into use, allows the aerosol-forming substrate to extend from the first opening of the fixing tube into the fixing tube, and then, the heating assembly inserts through a support arm of the gas passage tube to insert from the second opening into the aerosol-forming substrate in order to implement heating to the aerosol-forming substrate. After the heating is completed, the aerosol-forming substrate is withdrawn from the fixing tube toward the first opening, and the heating assembly and the aerosol-forming substrate are separated. By providing the first opening and the second opening in two ends of the hollow fixing tube, the aerosol generation device allows for efficient removal of the aerosol-forming substrate from the fixing tube without causing damages thereto and prevents a medium of the aerosol-forming substrate from residually remaining in the aerosol generation device.

### BRIEF DESCRIPTION OF THE DRAWINGS

The present invention is further below with reference to the accompanying drawings and embodiments. In the accompanying drawings:
FIG 1 is a schematic structural diagram of an aerosol generation device according to embodiments of the present invention;
FIG 2 is a cross-sectional view of the aerosol generation device illustrated in FIG 1;
FIG 3 is a partial enlarged view of the aerosol generation device illustrated in FIG 2;
FIG 4 is a schematic exploded structural diagram of the aerosol generation device illustrated in FIG 1;
FIG 5 is a schematic structural diagram of a fixing tube of the aerosol generation device illustrated in FIG 4;
FIG 6 is a schematic structural diagram of a gas passage tube of the aerosol generation device illustrated in FIG 4; and
FIG 7 is a schematic structural diagram of a top cover of the aerosol generation device illustrated in FIG 4.

### DETAILED DESCRIPTION

For better understanding of the technical feature, purposes, and efficacy of the present invention, a detailed description of embodiments of the present invention will be provided with reference to the attached drawings.

It should be understood that, terms such as "front", "rear", "left", "right", "upper", "lower", "first", and "second" are merely for ease of describing the technical solutions of the present invention rather than indicating that the mentioned apparatus or component needs to have a particular difference. Therefore, these terms should be not construed as a limitation to the present invention. It should be noted that, when a component is considered to be "connected to" another component, the component may be directly connected to the another component, or an intermediate component may also be present. Unless otherwise defined, meanings of all technical and scientific terms used in this specification are the same as that usually understood by a person skilled in the technical field to which the present invention belongs. In this specification, terms used in the specification of the present invention are merely intended to describe objectives of the specific embodiments, but are not intended to limit the present invention..

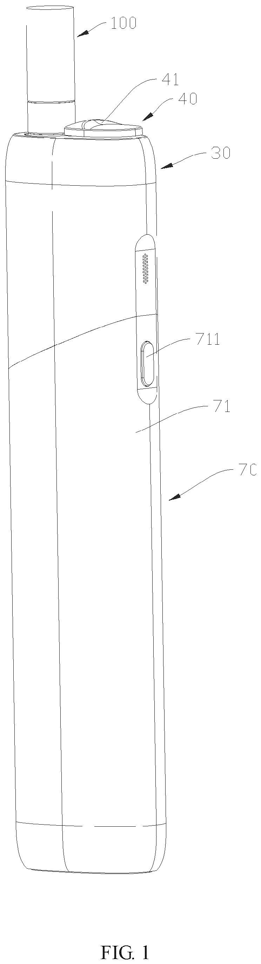

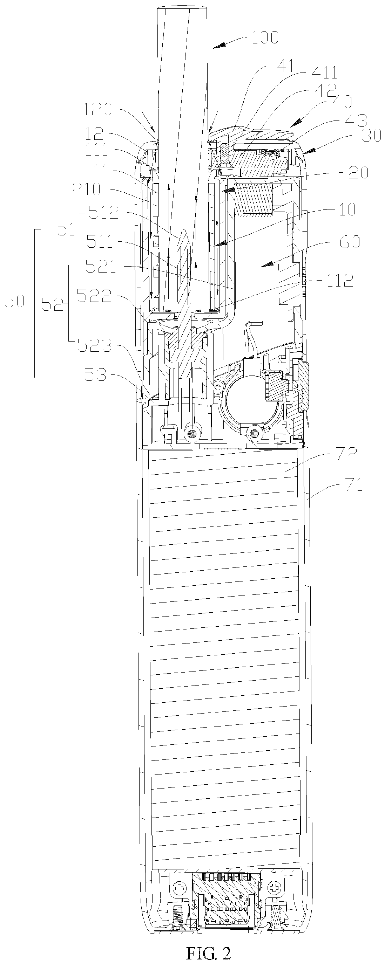

FIGS. 1 and 2 show embodiments of an aerosol generation device according to the present invention. The aerosol generation device is operable to heat an aerosol-forming base-body 100 in a low-temperature heating but non-combusting manner, and in some embodiments, the aerosol-forming substrate 100 can be a cigarette.

As shown in FIGS. 1 and 2, the aerosol generation device includes an accommodating assembly, a gas passage tube 20, a gas flow channel, and a heating assembly 50. The accommodating assembly includes a fixing tube 10 and a top cover 30. The fixing tube 10 is arranged in the top cover 30 to be releasably connected to the top cover 30, and is connected by means of an arrangement of connection assembly to the top cover 30 to form a one-piece structure. Certainly, in some other embodiments, the fixing tube 10 can be integrally formed with the top cover 30, such as the top cover 30 being integrally formed by means of injection molding or casting. The fixing tube 10 is configured to hold and fix the aerosol-forming substrate 100. The gas passage tube 20 is arranged in the top cover 30 and is sleeved around the outer circumference of the fixing tube 10 to form a gas flow channel for gas to flow therethrough. The top cover 30 is releasably fit over outside of the gas passage tube 20 and the heating assembly 50. The gas flow channel is in communication with the outside, and the gas flow channel allows external gas to get into the aerosol-forming substrate 100 in the fixing tube 10. The heating assembly 50 is releasably connected to the fixing tube 10, and the heating assembly 50 is insertable into the aerosol-forming substrate 100 in the fixing tube 10 and is operable to heat up the aerosol-forming substrate 100.

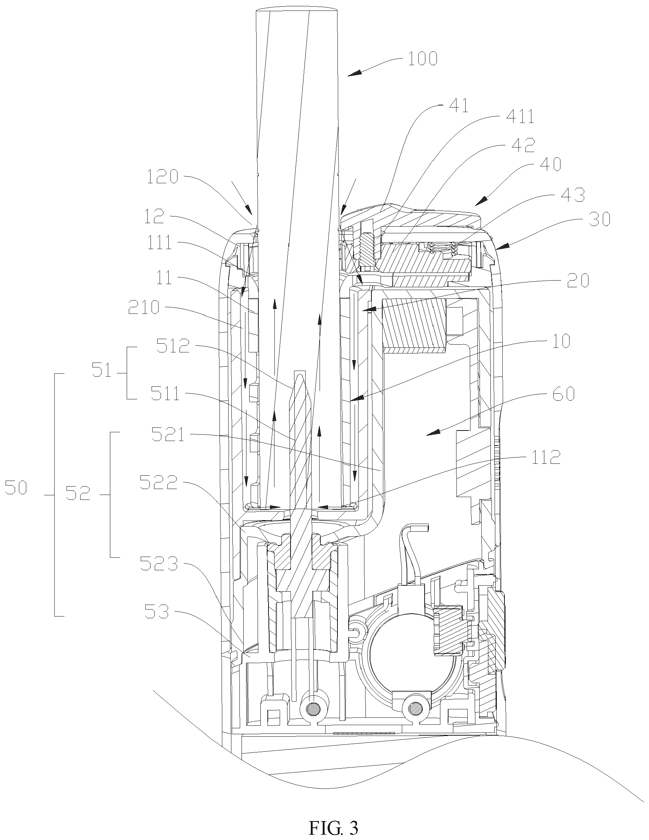

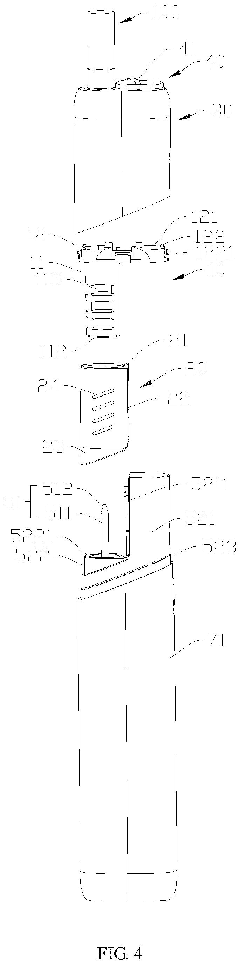

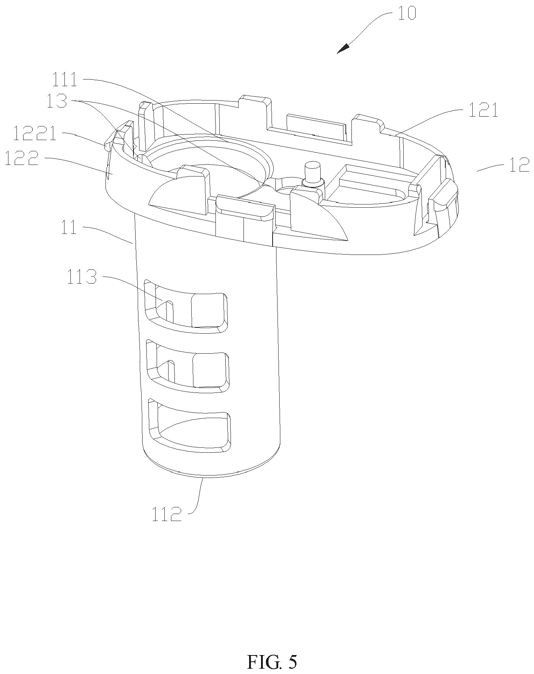

As shown in FIGS. 2-5, further, in some embodiments, the fixing tube 10 is a hollow and two-end-penetrating structure and functions for receiving the aerosol-forming substrate 100 to insert therein. Further, in some embodiments, the fixing tube 10 includes a fixing section 11 and a mounting section 12. The fixing section 11 is configured to hold and fix the aerosol-forming substrate 100, and the mounting section 12 is arranged at one end of the fixing section 11 to be mating with and mounted to the top cover 30.

In some embodiments, the fixing section 11 is in a shape of a tubular form, which is a hollow and two-end-penetrating structure having an interior forming an insertion channel, and specifically, the fixing section 11 is in the form of a round tube and the insertion channel is of a cylindrical configuration that is configured to receive the aerosol-forming substrate 100 to insert therein. The two ends of the fixing tube 10 are respectively provided with a first opening 111 and a second opening 112; specifically, in some embodiments, the first opening 111 and the second opening 112 are respectively arranged at the two ends of the fixing section 11 and are in an arrangement of being symmetrical along an axial direction and in communication with the insertion channel. The aerosol-forming substrate 100 can be inserted through the first opening 111 into the fixing tube and is withdrawable from the fixing tube 112 toward the first opening 111, and specifically, the aerosol-forming substrate 100 can be inserted to reach the second opening 112, and can be withdrawn from the second opening 112 toward the first opening 111. In some other embodiments, the aerosol-forming substrate 100 has a length that is greater than the distance between the first opening 111 and the second opening 112, and the aerosol-forming substrate 100 may extend beyond the second opening to abut against a support wall of the gas passage tube 20. In some other embodiments, the aerosol-forming substrate 100 may not reach the second opening. Specifically, in some embodiments, the first opening 111 is made a horn and a radial dimension of the first opening 111 is arranged to be gradually reduced in a direction toward the second opening 112 in order to facilitate insertion of the aerosol-forming substrate 100 therein. Further, in some embodiments, a sidewall of the fixing section 11 is formed with through holes 113, and there may be multiple ones of such through holes 113, and specifically, in some embodiments, the multiple through holes 113 are divided into three groups and the three groups of the through holes 113 are arranged side by side in an axial direction of the fixing section 11. Each group of the through holes 113 comprises three through holes 113 arranged at intervals in a circumferential direction of the fixing section 11, and each of the through holes 113 is an elongate opening. In some other embodiments, the through holes 113 are not limited to be plural ones and there can be just one or simply omitted. Opening such through holes 113 helps reduce a contact area between the aerosol-forming substrate 100 and the fixing tube 10 so as to reduce an amount of heat transfer of the aerosol-forming substrate 100.

In some embodiments, the mounting section 12 is arranged in the fixing section 11 at a location facingthe first opening 111 and has a cross section that is elliptical. The cross section has a shape and size to face the shape and size of a cross section of an interior of the top cover 30. The mounting section 12 comprises a hollow compartment 121 and a sidewall 122. The hollow compartment 121 has a top side that is provided with an opening and the opening is in communication with a third opening 31 formed in the top cover 30. The hollow compartment 121 is arranged to be in communication with the insertion channel of the fixing section 11. The sidewall 122 is arranged around the outer circumference of the hollow compartment 121 and is connected to a tubular wall of the fixing section 11 and is integrally formed with the fixing section 11, and specifically, in some embodiments, is integrally formed with the fixing section 11 by means of casting or injection molding.

In some embodiments, a bottom wall of the mounting section 12 and the sidewall of the fixing section 11 are provided with inlet openings 13. There may be two such inlet openings 13, and one of the inlet openings 13 is arranged in the sidewall of the fixing section 11, and the other one of the inlet openings 13 is arranged in the bottom wall of the mounting section 12 and extended toward the sidewall of the fixing section 11. In some other embodiments, the inlet openings 13 are not limited to be two and are not limited to be arranged in the bottom wall of the mounting section 12 or the sidewall of the fixing section 11. In some embodiments, the hollow compartment 121 is in communication with the inlet opening 13 to form a first inlet channel 120.

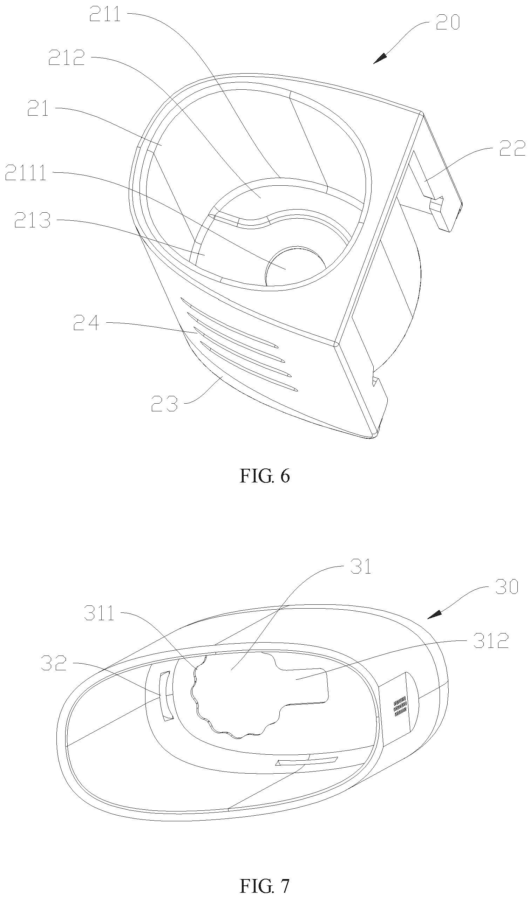

As shown in FIGS. 2-6, further, in some embodiments, the gas passage tube 20 is sleeved around the outer circumference of the fixing section 11 so as to form a gap with respect to the fixing section 11. The inlet openings 13 are in communication with the gap, and the gap realizes, on one hand, an effect of thermal insulation during heating and, on the other hand, accommodation of a residue of the aerosol-forming substrate 100 after heating, where to clear out the residue, the top cover 30 is slid off and the fixing tube 10 is removed out of the gas passage tube 20, and the residue in the gas passage tube 20 can be simply poured out. The height of the gas passage tube 20 is greater than or equal to the height of the fixing section 11. The gas passage tube 20 comprises a tubular body 21, and the tubular body 21 is sleeved around the outer circumference of the fixing section 11. The interior of the tubular body 21 is in a shape of a cylindrical form. The radial dimension of the gas passage tube 20 is greater than the radial dimension of the fixing section 11. The gas passage tube 20 and the fixing section 11 define therebetween the gap, so as to form a second inlet channel 210 in communication with the first inlet channel 120. In some embodiments, one end of the gas passage tube 20 is formed with a support wall 211. Specifically, in some embodiments, the support wall 211 is arranged at an end of the tubular body 21, and is arranged to face the second opening 112 for functioning to support the aerosol-forming substrate 100. The support wall 211 is further formed with a through aperture 2111. The cross-sectional shape of the through aperture 2111 corresponds to the cross-sectional shape of a heating body 51 of the heating assembly 50, and in some embodiments, the through aperture 2111 is circular for receiving heating assembly 50 to penetrate into the fixing tube 10 to ease penetration of the heating body 51 of the heating assembly 50 into the aerosol-forming substrate 100. In some embodiments, the cross-sectional size of the through aperture 2111 is smaller than the cross-sectional size of the second opening 112, in order to prevent the aerosol-forming substrate 100 from projecting out of the gas passage tube 20. The support wall 211 is provided with two support platforms 212. The two support platforms 212 are arranged in an interior of the tubular body 21, and the two support platforms 212 are respectively located on two opposite sides of the through aperture 2111. An interval between the two support platforms 212 forms a third inlet channel 213 that is in communication with the second inlet channel 210. The third inlet channel 213 is arranged to face the second opening 112 and is in communication with the second opening 112, so as to allow gas to enter and get into the aerosol-forming substrate 100 in the fixing tube 10. In some other embodiments, the support platforms 212 are not limited, in number, to be two and can be of multiple ones.

In some embodiments, the gas passage tube 20 further comprises a first engagement section 22 that is arranged on one side of the tubular body 21 and projecting outward and a second engagement section 23 that is arranged on one end of the tubular body 21 and in a projecting configuration. The first engagement section 22 and the second engagement section 23 are both slidably combinable with the heating assembly 50 so as to achieve releasable connection of the entirety of the gas passage tube 20 with the heating assembly 50.

In some embodiments, a sidewall of the gas passage tube 20 is provided with an operation section 24, and the operation section 24 may comprise multiple recesses in a strip form to define a finger position on which a user's finger is positionable to increase a fictional force between the user's finger and the gas passage tube 20 to allow the user to easily perform an operation of mounting and removing the gas passage tube 20.

As shown in FIGS. 2-4 and 7, further, in some embodiments, the top cover 30 is removably sleeved around the outer circumference of the gas passage tube 20. The top cover 30 is formed with the third opening 31. The third opening 31 can be arranged in a top surface of the top cover 30 and in communication with the hollow compartment 121, and facingthe first opening 111. The aerosol-forming substrate 100 can extend, through the third opening 31, into an interior of the first opening 111 to further reach into the second opening 112. An inside wall of the third opening 31 can be formed with an inlet cavity 311. The inlet cavity 311 can be multiple in number arranged at intervals in a circumferential direction of the third opening 31 and in communication with the first inlet channel 120 to allow external gas to move into the first inlet channel 120.

In some embodiments, the top cover 30 and the mounting section 12 are provided with a coupling structure. The coupling structure is configured to releasably connect the top cover 30 and the mounting section 12. In some embodiments, the coupling structure comprises a locking fastener 1221 and a locking slot 32. The locking fastener 1221 is arranged on a sidewall 122 of the mounting section 12 and can be multiple in number, and specifically, in some embodiments, there are four such snap fasteners 1221, and the four snap fasteners 1221 are arranged at intervals in a circumferential direction of the sidewall 122. The locking slot 32 is arranged in the inner side of the top cover 30 at a location adjacent to a top wall of the top cover 30, and can be multiple in number arranged facingt he snap fasteners 1221 and snap-connectable the snap fasteners 1221. To mount, the top cover 30 is fit along the mounting section 12 to sleeve around the outer circumference of the gas passage tube 20, and the snap fasteners 1221 of the mounting section 12 are set, one by one, in snap connection into the locking slots 32. By means of the coupling structure, when the top cover 10 is slid, the fixing tube 10 is simultaneously withdrawn out of the gas passage tube 20.

Further, in some embodiments, the gas flow channel comprises the first inlet channel 120, the second inlet channel 210, and the third inlet channel 213. The first inlet channel 120 is arranged in the accommodating assembly and is located in the top cover 30 and in communication with the outside. Specifically, the first inlet channel 120 is formed of the inlet cavity 311 of the third opening 31, the hollow compartment 121 in the interior of the mounting section 12, and the inlet opening 13 of the fixing section 11. The second inlet channel 210 is arranged between the gas passage tube 20 and the fixing tube 10, and is in communication with the first inlet channel 120 and the fixing tube 10, and specifically, the second inlet channel 210 is arranged between the tubular body 21 and the fixing section 11 and is formed of the gap between the tubular body 21 and the fixing section 11, and is in communication with the second opening 112 and the inlet opening 13 to allow the gas flow to get into the aerosol-forming substrate 100 in the fixing tube 10. The third inlet channel 213 is formed between the two support platforms 212 of the gas passage tube 20, and is in communication with the second opening 112. When a user is doing inhaling, external air sequentially moves through the support wall 211 between the fixing tube 10 and the gas passage tube 20 and then get into the aerosol-forming substrate 100 in the fixing tube 10 through the second opening 112. Specifically, when the user inhales a vaporized gas, the external air moves through the inlet cavity 311 into the first inlet channel 120, and then through the inlet opening 13 into the second inlet channel 210, and then changes direction by means of the support wall 211 to enter the third inlet channel 213 to then move through the second inlet opening 112 into the interior of the aerosol-forming substrate 100 to be finally conveyed into the user's mouth. By arranging the second inlet channel 210 between the gas passage tube 20 and the fixing tube 10, on the one hand, heat of the heating assembly 50 is prevented from transmitting to the sidewall of the top cover 10 so as to avoid discomfort of hand holding by the user resulting from an excessively high temperature of the sidewall of the top cover 10, and on the other hand, the structure of the gas flow channel is simplified to shorten a gas flow conveyance path to avoid phenomena of jamming or blocking.

As shown in FIGS. 2-4, further, in some embodiments, the aerosol generation device further comprises a protective lid 40. The protective lid 40 is slidably mounted on the top cover 30, and is movable, through sliding, to close and block the third opening 31 to prevent dust from falling into the fixing tube 10 when there is no aerosol-forming substrate 100 inserted into the fixing tube 10. In some embodiments, the protective lid 40 comprises a lid body 41, and the lid body 41 is arranged on a top wall of the top cover 30 and is reciprocally slidable in a direction toward the third opening 31. The lid body 41 is provided with a connection peg 411, and the connection peg 411 is insertable into the top cover 30. The top cover 30 has a guide hole 312, and the guide hole 312 is arranged to be in communication with the third opening 31. The guide hole 312 can be an elongate opening in a strip form. The connection peg 411 is insertable through the guide hole 312 into the top cover 30. A slider 42 is arranged in the hollow compartment 121 of the mounting section 12, and the slider 42 is arranged to be slidable in a direction toward the third opening 31. The connection peg 411 is connected with the slider 42 to drive the slider 42 to slide. An elastic piece 43 is arranged between the slider 42 and the sidewall of the mounting section 12. The elastic piece 43 generates a spring force to ease sliding and returning of the slider 42.

Further, in some embodiments, the heating assembly 50 comprises the heating body 51. The heating body 51 inserts through the support wall 211 to insert through the second opening 112 into the aerosol-forming substrate 100. Specifically, in some embodiments, the heating body 51 extends through the through aperture 2111. In some embodiments, the heating body 51 is in a shape of a columnar configuration, and certainly, in some other embodiments, the heating body 51 is not limited to a columnar configuration and can be in the form of a plate. In some embodiments, the heating body 51 comprises a cylindrical main portion 511 and a sharp tip structure 512. The sharp tip structure 512 is arranged at one end of the main portion 511 to ease the insertion of the heating body 51 into the aerosol-forming substrate 100. The sharp tip structure 512 is in a shape of a conical form. By arranging the main portion 511 of the heating body 51 in a cylindrical form and arranging the sharp tip structure 512 in a conical form, the aerosol-forming substrate 100 is withdrawable from the second opening 112 toward the first opening 111 by means of rotation to be separated from the heating body 51 to thereby ease removal and replacement of the aerosol-forming substrate 100.

Further, in some embodiments, the heat-generating assembly further comprises a retaining frame 52. The retaining frame 52 functions for mounting the heating body 51 and is combinable with the gas passage tube 20 through sliding engagement, and may receive the top cover 30 to sleeve therearound. The retaining frame 52 is in the form of a sleeve body, and the sleeve body comprises a first sleeving section 521 and a second sleeving section 522. The first sleeving section 521 and the second sleeving section 522 are arranged side by side in a transverse direction and are integrally formed, and specifically, in some embodiments, the first sleeving section 521 and the second sleeving section 522 are integrally formed together by means of injection molding or casting. An interior of the first sleeving section 521 receives a control circuit board 60 therein. The control circuit board 60 is connected to the heating assembly 50 and is operable to activate or deactivate the heating assembly 50. The sidewall of the first sleeving section 521 that is adjacent to the second sleeving section 522 is provided with a first joining section 5211. The first joining section 5211 can be a joining projection arranged on the first sleeving section 521 and is combinable with and fixed to the first engagement section 22 arranged on one side of the tubular body 21, and specifically, a first slide channel is formed inside the first engagement section 22, and the first slide channel is connectable with the joining projection through sliding. The height of the second sleeving section 522 is less than the height of the first sleeving section 521, and the heating body 51 is extendable out of the second sleeving section 522. The gas passage tube 20 is arranged on the top of the second sleeving section 522. The second sleeving section 522 is provided with a second joining section 5221, and the second joining section 5221 can be a joining projection, and the joining projection is connectable with the second engagement section 23 arranged at one end of the tubular body 21, and specifically, a second slide channel is formed inside the second engagement section 23, and the second slide channel is connectable with the joining projection through sliding. To mount, the first engagement section 22 of the gas passage tube 20 is fit onto the first joining section 5211, and the second engagement section 23 is sleeved around the second joining section 5221 and sliding is made in a longitudinal direction of the first joining section 5211 and the second joining section 5221 to have the support wall of the tubular body of the gas passage tube 20 abutting the bottom wall of the second joining section 5221. In some embodiments, the retaining frame 52 further comprises a rim 523 mating the top cover 30. The rim 523 abuts an outer circumferential wall of the first sleeving section 521 and the second sleeving section 522.

Further, in some embodiments, the heating assembly 50 further comprises a bracket 53 mounted in cooperation with the retaining frame 52, and the retaining frame 52 is fit to the bracket 53. The heating body 51 is arranged on the bracket 53.

Further, in some embodiments, the aerosol generation device further comprises a power supply assembly 70. The power supply assembly 70 is mechanically and electrically connected to the heating assembly 50 to supply electricity to the heating assembly 50. The power supply assembly 70 comprises a power casing 71 and a battery 72 arranged in the power casing 71. The retaining frame 52 is arranged in the open end of the power casing 71. The power casing 71 is provided thereon with an activation-deactivation switch 711, and the activation-deactivation switch 711 is in connection with the control circuit board 60. The battery 72 is connected with the heating assembly 50 and supplies electricity to the heating assembly 50. Specifically, in some embodiments, the battery 72 is connected by means of the control circuit board 60 to the heating assembly 50.

To use the aerosol generation device, when heating is desired, the aerosol-forming substrate 100 is inserted through the third opening 31 to penetrate from the first opening 111 into the interior of the second opening 112, or the aerosol-forming substrate 100 is inserted through the third opening 31 to penetrate from the first opening 111 into the interior of the fixing tube 10 and to project out of the second opening 112 to abut against the support wall 211, and meanwhile, the heating body 51 of the heating assembly 50 is caused to penetrate through the support wall 211 to insert from the second opening 112 into the interior of the aerosol-forming substrate 100, so as to carry out heating toward the aerosol-forming substrate 100. After the heating is completed, the aerosol-forming substrate 100 is rotated to have the aerosol-forming substrate 100 to withdraw from the second opening 112 toward the first opening 111 to thereby separate from the heating body 51 of the heating assembly 50. Certainly, in some other embodiments, a cigarette push mechanism may be provided to push, from the second opening 112, the aerosol-forming substrate 100 out.

It is appreciated that the embodiments provided above illustrate only the preferred ways of embodiment of the present invention and the illustration is made in a specific and detailed way, yet it should not be construed as constraints to the scope of the present invention defined in the claims. It is noted that for artisans having ordinary skill in the art are allowed to do unlimited combinations of the technical features described above without departing from the conceptions of the present invention, and are also allowed to do various modifications and improvements, these all belonging to the scope of protection of the present invention. Thus, all alterations and modifications that are equivalent to the claims of the present invention are considered within the scope of the claims of the present invention.

## Claims

1. An aerosol generation device, **characterized by** comprising:
a fixing tube (10) configured to fix aerosol-forming base-body (100), comprsing a hollow and two-end-penetrating structure and having two ends that are respectively formed with a first opening (111) and a second opening (112) in communication with the first opening (111);
a gas passage tube (20) sleeved around the outer circumference of the fixing tube (10), and having one end provided with a support wall (211) configured for supporting aerosol-forming base-body (100), and arranged to correspond to the second opening (112);
and a heating assembly (50);
wherein aerosol-forming base-body (100) is insertable from the first opening (111) into the fixing tube (10);
wherein the heating assembly (50) is insertable through the support wall (211) to penetrate from the second opening (112) into aerosol-forming base-body (100);
and wherein aerosol-forming base-body (100) is withdrawable from the fixing tube (20) toward the first opening (111), so as to have the heating assembly (50) separated from aerosol-forming base-body (100).

2. The aerosol generation device according to claim 1, wherein the fixing tube (10) comprises a fixing section (11) that is configured to fix aerosol-forming base-body (100) and is removably inserted into the gas passage tube (20) and is in a tubular form; the fixing section (11) is of a hollow structure, of which an interior forms an insertion channel;
the first opening (111) and the second opening (112) are respectively arranged on two ends of the fixing section (11) and are in communication with the insertion channel.

3. The aerosol generation device according to claim 2, wherein a gap is formed between the fixing section (11) and the gas passage tube (20).

4. The aerosol generation device according to claim 2, wherein a through hole (113) is formed in a sidewall of the fixing section (11) and is in communication with the gas passage tube (20).

5. The aerosol generation device according to claim 2, wherein the fixing tube (10) further comprises a mounting section (12) arranged at the first opening (111) of the fixing section (11);
the aerosol generation device further comprises a top cover (30) sleeved around the outer circumference of the fixing tube (10) and releasably connected to the mounting section (12); the top cover (30) is removably sleeved around the outer circumference of the gas passage tube (20);
the top cover (30) has a third opening (31) arranged to facethe first opening (111).

6. The aerosol generation device according to claim 5, wherein the top cover (30) and the mounting section (12) are provided with a coupling structure for releasably connecting the top cover (30) to the mounting section (12).

7. The aerosol generation device according to claim 6, wherein the coupling structure comprises a locking fastener (1221) arranged on a sidewall (122) of the mounting section (12) and a locking slot (32) arranged in the inner side of the top cover (30) and arranged to face the locking fastener (1221).

8. The aerosol generation device according to claim 7, wherein the heat-generating assembly further comprises a protective lid (40) that is slidably mounted on the top cover (30) to close and block the third opening (31).

9. The aerosol generation device according to claim 8, wherein a slider (42) is arranged in a hollow compartment (121) of the mounting section (12) and is slidable in a direction toward the third opening (31); an elastic piece (43) is arranged between the slider (42) and the sidewall (122) of the mounting section (12);
the protective lid (40) comprises a lid body (41);
the lid body (41) is provided with a connection peg (411) that is inserted into the top cover (30) to connect to the slider (42).

10. The aerosol generation device according to claim 1, wherein the heating assembly (50) comprises a heating body (51) that is inserted through the support wall (211) to insert from the second opening (112).

11. The aerosol generation device according to claim 10, wherein the heating body (51) is in a shape of a columnar configuration.

12. The aerosol generation device according to claim 11, wherein the heating body (51) comprises a main portion (511) that is cylindrical and a sharp tip structure (512) that is arranged on one end of the main portion (511) and is in a shape of a conical form;
aerosol-forming base-body (100) is withdrawable, through rotation, from the second opening (112) toward the first opening (111) to separate from the heating body (51).

13. The aerosol generation device according to claim 10, wherein the support wall has a through aperture (2111) that is configured to allow the heating body (51) to pass throughinto the fixing tube (10).

14. The aerosol generation device according to claim 13, wherein the cross-sectional shape of the through aperture (2111) conforms to the cross-sectional shape of the heating body (51), and the cross-sectional size of the through aperture (2111) is less than the cross-sectional size of the second opening (112).

15. The aerosol generation device according to claim 10, wherein the heat-generating assembly further comprises a retaining frame (52) configured for mounting the heating body (51);
the gas passage tube (20) is sliding-engageable with the retaining frame (52).

16. The aerosol generation device according to claim 15, wherein the retaining frame (52) comprises a sleeve body, and the sleeve body comprises a first sleeving section (521), and a second sleeving section (522) that is arranged side by side with respect to the first sleeving section (521) in a transverse direction and is connected to the first sleeving section (521);
the height of the second sleeving section (522) is less than the height of the first sleeving section (521), and the heating body (51) is extendable out of the second sleeving section (522).

17. The aerosol generation device according to claim 16, wherein the sidewall of the first sleeving section (521) that is adjacent to the second sleeving section (522) is provided with a first joining section (5211);
the second sleeving section (522) is provided with a second joining section (5221);
the gas passage tube (20) comprises a tubular body (21), a first engagement section (22) arranged on one side of the tubular body (21) and connectable with the first joining section (5211), and a second engagement section (23) arranged at one end of the tubular body (21) to fit to the second joining section (5221) to connect with the second joining section (5221).

18. The aerosol generation device according to claim 1, wherein a sidewall of the gas passage tube (20) is provided with an operation section (24);
the operation section (24) comprises multiple elongate recesses.

19. The aerosol generation device according to claim 1, wherein the heat-generating assembly further comprises a power supply assembly (70) connected with the heating assembly (50).
